# EUROPÄISCHE PATENTSCHRIFT

(11) **EP 2 795 186 B1**
(45) Veröffentlichungstag und Bekanntmachung des Hinweises auf die Patenterteilung: **07.02.2018**
(21) Anmeldenummer: 12797919.3
(22) Anmeldetag: 07.12.2012
(51) Int. Cl.: F21V 8/00, G02F 1/13357

(54) **BELEUCHTBARES PANEEL FÜR EINE FAHRTREPPE, EINEN FAHRSTEIG ODER EINE AUFZUGSKABINE**
ILLUMINABLE PANEL FOR AN ESCALATOR, A MOVING PAVEMENT OR A LIFT CAR
PANNEAU POUVANT ÊTRE ÉCLAIRÉ POUR ESCALIER ROULANT, TAPIS ROULANT OU CABINE D'ASCENSEUR

(30) Priorität: 21.12.2011 EP 11194843
(43) Veröffentlichungstag der Anmeldung: 29.10.2014
(73) Patentinhaber: Inventio AG, 6052 Hergiswil (CH)
(72) Erfinder: NIEDERMAYER, Günther, A-1220 Wien (AT); MATHEISL, Michael, A-2331 Vösendorf (AT)
(86) Internationale Anmeldenummer: PCT/EP2012/074719
(87) Internationale Veröffentlichungsnummer: WO 2013/092241

(56) Entgegenhaltungen:
- WO-A1-95/27969
- WO-A1-2006/056224
- WO-A1-2006/061709
- WO-A1-2007/100493
- DE-A1- 19 838 901
- DE-A1-102004 059 742
- DE-U1- 29 915 399
- JP-A- 5 097 370
- JP-A- 2000 263 699
- US-A- 5 339 228
- US-A1- 2009 273 947

## Beschreibung

Die Erfindung betrifft eine Fahrtreppe, einen Fahrsteig oder eine Aufzugskabine mit mindestens einem beleuchtbaren Paneel.

Aufzüge werden sowohl im privaten wie auch im öffentlichen Bereich eingesetzt. Eine angenehme, ausreichend helle Beleuchtung und eine schmucke Innenausstattung beeinflussen das Wohlbefinden des Benutzers in der Aufzugskabine wesentlich. Fahrtreppen und Fahrsteige werden nahezu ausschließlich im öffentlichen Bereich benutzt, insbesondere im Bereich des öffentlichen Verkehrs, zum Beispiel in Bahnhöfen, U-Bahnstationen, in Warenhäusern, Einkaufszentren sowie in größeren Hotels. Sie umfassen im Allgemeinen ein Tragwerk und mindestens ein im Tragwerk angeordnetes, sich in seiner Längsrichtung bewegbares Palettenband oder Stufenband, an das sich seitlich ortsfeste Balustraden anschließen. Die Balustraden weisen Metallpaneele oder Glaspaneele auf, welche mittels eines Balustradensockels am Tragwerk befestigt sind. Oberhalb jeder Balustrade ist ein sich mit dem Palettenband oder Stufenband bewegender Handlauf angeordnet.

Fahrtreppen und Fahrsteige weisen üblicherweise Beleuchtungssysteme auf, die den Komfort der Benutzer erhöhen und mithelfen, Unfälle zu vermeiden. Bekannte Beleuchtungssysteme für Fahrsteig- und Fahrtreppenanlagen sind so ausgelegt, dass nur gewisse Bereiche der Fahrsteig- oder Fahrtreppenanlagen beleuchtet sind. Diese Bereiche befinden sich zwischen den Balustraden. Beleuchtet werden zum Beispiel nur ein oberer Bereich mit dem Handlauf, ein unterer Bereich, in welchem sich die Balustraden und das Palettenband beziehungsweise Stufenband treffen, oder diejenigen Bereiche, über welche die Fahrsteig- oder Fahrtreppenanlagen betreten oder verlassen werden.

In der EP 1 489 036 A1 ist ein Beleuchtungssystem offenbart, das eine durchgehend gute Ausleuchtung des Raumes zwischen den Balustraden erlaubt und mit einer leichten und dennoch stabilen Innenverkleidung der Balustraden realisierbar ist. Obwohl durch die Anordnung von Reflektoren, einer hohen Anzahl Leuchtmittel und dem Einsatz von Mattglas ein großer Aufwand betrieben wird die beleuchtbare Innenverkleidung möglichst homogen auszuleuchten, gelingt dies nur mangelhaft. Jede Lichtquelle erscheint durch deren direkte Strahlungsrichtung als hellere Stelle auf der Mattglasscheibe im Vergleich zu den durch Reflexion des Reflektors beleuchteten Gebieten. Auch Strahlungsüberlagerungen beziehungsweise mangelhafte Überdeckung mehrerer Lichtquellen erzeugen hellere oder dunklere Stellen auf der Mattglasscheibe der beleuchtbaren Innenverkleidung. Ferner erfordert die Unterbringung der Lichtquelle und der Reflektoren einen sehr breiten Querschnitt der Balustrade.

Seit einigen Jahren werden Fahrtreppen und Fahrsteige insbesondere in Warenhäusern, Einkaufszentren und größeren Hotels in die Gestaltungskonzepte der Gebäude mit einbezogen. Sie dienen nicht nur der reinen Beförderung von Benutzern, sondern auch als Gestaltungsmerkmale von Innen- und Außenräumen der Gebäude. So sind die Balustradenverkleidungen, Seitenverkleidungen und Untersichtverkleidungen in den unterschiedlichsten Farben und Materialien belegt erhältlich, um den individuellen Wünschen des Betreibers zu entsprechen.

Von den Betreibern wird gefordert, dass die mit lackierten oder belegten Paneelen verschalte Oberfläche einer Fahrtreppe oder eines Fahrsteiges ein einheitliches Erscheinungsbild aufweist. Somit müssen die einzelnen Paneele einen einheitlichen Farbton, eine einheitliche Farbsättigung und eine einheitliche Helligkeit aufweisen. Dies ist auch der langgehegte, aber immer noch unerfüllte Wunsch betreffend beleuchteter, großer Flächen. Wie weiter oben beschrieben, sind bei der Innenverkleidung der EP 1 489 036 A1 die Lichtquellen deutlich als hellere Stellen erkennbar. Ferner ist diese Art der Beleuchtung sehr aufwändig und teuer.

Ähnliche Vorgaben gelten auch für die Innenausstattung von Aufzugskabinen. Um dem Benutzer ein Gefühl von Sicherheit zu geben, sollte ein möglichst klares, homogenes Erscheinungsbild vorhanden sein. Zerkratzte oder beschädigte Kabinenwände, eine mangelhafte Ausleuchtung oder hellere und dunklere Stellen der Beleuchteten Oberflächen des Kabineninnenraums können die Angst des Benutzers fördern. Die WO2006061709 beschreibt eine solche Paneele für einen Fußboden.Die Paneele besitzt einen Schichtaufbau mit Reflektor, als Lichtleiter genutzter Streuschicht mit Lichteinkopplung über die Kante und ein darauf gesetztes Sicherheitsglas. Das Sicherheitsglas ist mittels eines Abstandshalters auf die Wellenleiterschicht aufgesetzt. Über die Kante beleuchtete und als Lichtleiter benutzte Paneele aus Sicherheitsgläsern sind ebenfalls bekannt (siehe die JP2000263699, die DE19838901 oder die DE102004059742).

Aufgabe der vorliegenden Erfindung ist es daher, ein beleuchtbares Paneel für einen Fahrsteig, eine Fahrtreppe oder eine Aufzugkabine zu schaffen, das eine gleichmäßig beleuchtete Oberfläche und einen kompakten Aufbau aufweist sowie kostengünstig in der Herstellung ist.

Diese Aufgabe wird gelöst durch ein beleuchtbares Paneel gemäß Anspruch 1 welches durch mindestens ein Leuchtmittel beleuchtbar ist. Das Leuchtmittel ist an mindestens einem Kantenbereich des beleuchtbaren Paneels angeordnet. Das beleuchtbare Paneel weist einen mehrere Schichten beinhaltenden Aufbau auf. Die beiden Seitenoberflächen jeder Schicht sind in ihrer flächigen Ausdehnung durch einen Kantenbereich begrenzt. Die Schichten des Aufbaus liegen mit ihren Seitenoberflächen einander an, das heißt, dass die Schichten mit ihren Seitenoberflächen aufeinandergeschichtet werden, um den gewünschten Aufbau zu erhalten. Die Schichtfolge des Aufbaus ist festgelegt, wobei eine erste Schicht eine reflektierende Abdeckung ist, eine zweite Schicht eine transparente, kantenbeleuchtbare, lichtstreuende Partikel beinhaltende Polymerwerkstoffplatte ist, eine dritte Schicht eine erste Glasscheibe ist, eine vierte Schicht eine transparente Polymerschicht ist und eine fünfte Schicht eine zweite Glasscheibe ist.

Damit das Paneel das im Kantenbereich eingespeiste Licht gleichmäßig über die in ihrer flächigen Ausdehnung durch den Kantenbereich begrenzte Seitenoberfläche abgeben kann, ist ein spezieller Lichtleiter erforderlich. Seit einiger Zeit sind im Handel transparente, kantenbeleuchtbare Polymerwerkstoffplatten aus Polymethylmethacrylat (PMMA) erhältlich, die zusätzlich transparente, lichtstreuende Partikel aufweisen. Durch die eingebetteten, lichtstreuenden Partikel weisen diese Polymerwerkstoffplatten das gewünschte Lichtleitverhalten auf. Sie werden kantenbeleuchtet und verteilen ihr in den Kantenbereich eingespeistes Licht gleichmäßig über die in ihrer flächigen Ausdehnung durch den Kantenbereich begrenzte Seitenoberflächen der Polymerwerkstoffplatte. Die Eintrittsfläche des Lichts ist vorzugsweise orthogonal zur Austrittsfläche des Lichts angeordnet, um Lichtkonzentrationen an der Seitenoberfläche zu vermeiden. Durch diese Eigenschaften kann ein beleuchtbares Paneel sehr kostengünstig und einfach aufgebaut werden. Ferner kann das Leuchtmittel seitlich der Polymerwerkstoffplatte angeordnet werden, was dessen Wartung erheblich erleichtert und zu einem sehr kompakten Aufbau des beleuchtbaren Paneels führt.

Grundsätzlich strahlen diese Polymerwerkstoffplatten über beide Seitenoberflächen ab. Bei gewünschter einseitiger Abstrahlung wird die rückseitige Seitenoberfläche mit einer reflektierenden Abdeckung versehen. Die abstrahlende Seitenoberfläche kann ferner durch einen Informationsträger, beispielsweise eine Motivfolie, überspannt sein und eine Schutzabdeckung, beispielsweise aus kratzfestem Glas aufweisen.

Die Verwendung des vorangehend beschriebenen Lichtleiters für kantenbeleuchtbare Paneele birgt aber die nachfolgend aufgeführten Nachteile, welche nicht zu den gewünschten Eigenschaften des beleuchtbaren Paneels führen. Die Abdeckungen beziehungsweise der Informationsträger dürfen gemäß den Herstellerangaben nicht vollflächig auf die Polymerwerkstoffplatte geklebt oder laminiert werden, da bei einem optischen Kontakt lokale, störende Aufhellungen und Verdunkelungen entstehen würden. Bei der Konstruktion von kantenbeleuchtbaren Paneelen mit den vorangehend beschriebenen Polymerwerkstoffplatten ist daher auf eine entsprechende Distanzierung zwischen den einzelnen Schichten zu achten, so dass sie einander niemals anliegen. Aufgrund dieser Anforderungen sind jedoch großflächige liegende, beleuchtbare Paneele mit einheitlichem Erscheinungsbild nicht realisierbar, da die einzelnen Schichten des mehrschichtig aufgebauten Paneels unterschiedlich durchhängen und dies zu optischen Kontakten führen würde. Fahrtreppen, Fahrsteige und Aufzugkabinen sollten aber nach Wunsch der Betreiber auch mit liegenden, beleuchtbaren Paneelen für Untersichtverkleidungen beziehungsweise Kabinendächer ausgerüstet werden können. Ferner führt die geforderte Beabstandung der einzelnen Schichten zu dicken Paneelen, die als Seitenverkleidung eingesetzt, die Breite der Fahrtreppe, des Fahrsteiges oder der Aufzugkabine erheblich erhöhen. Des Weiteren werden durch die Beabstandung der Schichten im Paneel Kammern gebildet, in denen sich Kondenswasser bilden kann. Vibrationen, verursacht durch die Benutzer einer Fahrtreppe, eines Fahrsteiges oder Aufzugs könnten ferner zu temporären optischen Kontakten sowohl bei stehenden Paneelen wie auch bei liegenden Paneelen führen. Durch die temporären optischen Kontakte werden wandernde Aufhellungen und Verdunkelungen erzeugt, die zur Verunsicherung der Benutzer führen und diese von der Benutzung der Fahrtreppe, des Fahrsteiges oder des Aufzugs abschrecken könnten.

Obwohl die Seitenoberflächen der Polymerwerkstoffplatten vom Hersteller mit Schutzfolien versehen sind, können diese nach dem Transport, der Lagerung oder dem Zuschneiden trotzdem Kratzer aufweisen. Diese sind ohne Kantenbeleuchtung von bloßem Auge oftmals kaum erkennbar, bündeln jedoch das aus der Oberfläche austretende Licht sehr stark und stören den optischen Eindruck des beleuchteten Paneels.

Die vorgenannten Nachteile führten dazu, dass die kantenbeleuchtbaren Polymerwerkstoffplatten mit lichtstreuenden Partikel bisher nicht geeignet schienen, um kantenbeleuchtbare Paneele für Fahrtreppen und Fahrsteige zu schaffen. Bei Aufzügen sind sie höchstens für Deckenbeleuchtungen einsetzbar, aber wegen der möglichen temporären optischen Kontakte nur ohne Schutzabdeckung.

Erst durch die festgelegte Schichtfolge des mehrere, einander anliegende Schichten umfassenden Aufbaus konnte eine gleichmäßige Lichtverteilung über die durch den Kantenbereich begrenzte flächige Ausdehnung des Paneels erreicht und eine homogen beleuchtete Seitenoberfläche geschaffen werden. Eine zentrale Bedeutung kommt dabei der dritten, vierten und fünften Schicht zu. Die dritte Schicht und die fünfte Schicht sind Glasscheiben, welche einen für Glas typischen Brechungsindex von 1.45 bis 2.14 (dimensionslose Größe) aufweisen. Die vierte Schicht, welche eine transparente Polymerschicht ist, weist einen Brechungsindex im Bereich von 1.48 bis 1.56 auf. Bei der Verwendung der verschiedenen Materialien ist es unwahrscheinlich, dass die Polymerschicht genau denselben Brechungsindex wie die beiden Glasscheiben aufweist, die beiden Brechungsindizes unterscheiden sich aber nur geringfügig voneinander. Dies führt dazu, dass das durch Kratzer in der Oberfläche der Polymerplatte der zweiten Schicht sowie durch optische Kontakte zwischen der ersten und der zweiten Schicht und zwischen der zweiten und der dritten Schicht gebündelte Licht zerstreut wird, ohne es wahrnehmbar in die Spektralfarben zu zerlegen. Schon aus geringer Distanz betrachtet, weist das beleuchtete Paneel durch diesen Aufbau eine gleichmäßig leuchtende Seitenoberfläche auf.

Wenn in der vorliegenden Schrift eine gleichmäßige beziehungsweise homogene Lichtverteilung über die Seitenoberfläche erwähnt ist, bedeutet dies nicht, dass jeder Bereich der Seitenoberfläche des beleuchtbaren Paneels genau die gleiche Strahlungsleistung aufweisen muss. So kann der Randbereich der Seitenoberfläche aufgrund der näheren Lage zum Leuchtmittel durchaus eine leicht höhere Leuchtdichte aufweisen als die Mitte der Seitenoberfläche des beleuchtbaren Paneels. Eine gleichmäßig beziehungsweise homogen leuchtende Seitenoberfläche umschreibt klar und deutlich die Absenz von Lichtkonzentrationen wie sichtbaren Kratzern, optischen Kontakten und deutlich wahrnehmbarer Hell- und Dunkelstellen die über die Seitenoberfläche verteilt sind, wie sie beispielsweise bei der weiter oben erwähnten EP 1 489 036 A1 infolge einer Überlagerung der Lichtkegel mehrerer Leuchtmittel erfolgen kann.

Bei den ersten erfolgreichen Versuchen wurde die als dritte Schicht dienende Glasscheibe mit einer als vierte Schicht dienenden, transparenten Kunststofffolie beklebt und eine weitere Glasscheibe als fünfte Schicht angefügt. Das überraschend gute Ergebnis und die Analyse der Schichtfolge führten zu weiteren Versuchen. Bei einem dieser Versuche wurde festgestellt, dass die erste Glasscheibe, die transparente Polymerschicht und die zweite Glasscheibe durch eine Verbundglasscheibe ersetzt werden kann um denselben Effekt zu erzielen. Somit kann die transparente Polymerschicht eine Kunststofffolie oder ein Polymerklebstoff sein.

Die Schichten des Aufbaus müssen mit geeigneten Mitteln zu einem kantenbeleuchtbaren Paneel zusammengehalten werden. Dies können aus U-Profilen gebildete Rahmen sein, die die Kantenbereiche aller Schichten umfassen. Sofern die reflektierende Abdeckung eine Eigenstabilität aufweist und beispielsweise aus Stahlblech oder Aluminiumblech besteht, kann diese als Halterung für die weiteren Schichten ausgebildet sein. Dazu kann der Kantenbereich der reflektierenden Abdeckung an mindestens einem Kantenabschnitt abgekantet sein. Die Kantenbereiche der anderen, einander anliegenden Schichten des beleuchtbaren Paneels sind in diesem Kantenabschnitt durch den abgekanteten Kantenbereich eingefasst. Je nach Ausgestaltung des Paneel-Aufbaus können die nicht abgekanteten Kantenbereiche durch U-Profile, Winkelprofile oder Z-Profile eingefasst werden oder die Schichten mittels Befestigungselementen wie Federn, Schrauben, Klammern und dergleichen mehr an der reflektierenden Abdeckung fixiert werden.

Sofern das Leuchtmittel im abgekanteten Kantenabschnitt angeordnet werden soll, kann der abgekantete Kantenabschnitt mindestens einen Durchbruch aufweisen, welcher auf eine Lage und Größe des mindestens einen Leuchtmittels abgestimmt ist. Als Leuchtmittel können eine Vielzahl von Beleuchtungskörpern wie Leuchtstoffröhren, Leuchtdioden, Kaltkathodenlampen und dergleichen mehr eingesetzt werden. Auch eine den Kantenbereich der Polymerwerkstoffplatte umlaufende OLED (organic light emitting diode) ist möglich. Wenn beispielsweise eine Reihe von Leuchtdioden als Leuchtmittel verwendet wird, kann der abgekantete Kantenabschnitt eine Reihe von Durchbrüchen aufweisen, wobei die Teilung der Leuchtdioden der Teilung der Durchbrüche entspricht.

Eine Fahrtreppe oder ein Fahrsteig weist in den meisten Fällen große Seitenflächen und eine große Untersichtfläche auf, eine Aufzugkabine weist große Kabinenwandflächen und eine große Deckenfläche auf. Alle diese Flächen können durch mindestens ein beleuchtbares Paneel verkleidet werden. Um die Montage zu vereinfachen, kann das mindestens eine beleuchtbare Paneel in mehrere Paneel-Abschnitte unterteilt werden. Jeder Paneel-Abschnitt weist dann den aus mehreren, einander anliegenden Schichten beinhaltenden Aufbau auf.

Durch den mehrere Schichten aufweisenden Aufbau des Paneels beziehungsweise des Paneel-Abschnitts können Fugen zwischen den einzelnen Schichten vorhanden sein, auch wenn die Schichten satt aneinander anliegen oder sogar durch einen Spannrahmen gegeneinander gepresst sind. Die Fugenbreite der Fugen hängt von der Unebenheit der Seitenoberflächen und Steifigkeit der einzelnen Schichten ab, die aufeinander geschichtet den Aufbau des Paneels ergeben. Diese Fugen sind sehr schmal und weisen eine hohe Kapillarität auf. Um zu verhindern, dass sich beispielsweise Reinigungswasser in den Fugen der Paneele ansammelt, können die Fugen in den Kantenbereichen der Schichten mittels eines Dichtungselements umlaufend abgedichtet sein. Das Dichtungselement weist zwischen den Schichten eine Fugentiefe von 0,2 mm bis 20 mm auf. Vorzugsweise beträgt die Fugentiefe jedoch 8 mm bis 12 mm. Dadurch ist die Dichtigkeit sicher gegeben und das Dichtungselement kann problemlos durch den abgekanteten Kantenbereich der reflektierenden Abdeckung oder durch Zierleisten verborgen werden, ohne zu viel beleuchtbare Seitenoberfläche des Paneels zu verdecken. Das Dichtungselement kann beispielsweise eine Klebefolie mit einem dichtenden Klebefilm sein, aber auch eine Schicht einer aushärtenden Paste wie Silikonkautschuk und dergleichen mehr. Vorzugsweise wird transparenter Silikonkautschuk verwendet.

Damit der Eintritt des vom Leuchtelement emittierten Lichts in die Polymerwerkstoffplatte der zweiten Schicht nicht behindert wird, kann das Dichtelement eine auf das Leuchtmittel und die zweite Schicht abgestimmte Aussparung aufweisen.

Um einen identischen optischen Eindruck zweier nebeneinander angeordneter Paneel-Abschnitte zu erwirken, kann sich auch der einzubringende Lichtstrom des Lichtelements jedes Paneel-Abschnitts unterscheiden, da die einzelnen Paneel-Abschnitte unterschiedlich große Seitenoberflächen und Konturen aufweisen können. Vorzugsweise ist daher jedem Paneel-Abschnitt ein eigenes, in der Lichtstärke und/oder im Farbton und/oder in der Farbsättigung einstellbares Leuchtmittel zugeordnet.

Ferner kann jedem Paneel-Abschnitt mindestens ein Sensor zugeordnet sein. Dies kann nur ein einziger Sensor sein, der als Sensorsignal ein digitalisiertes Bild erfasst, dessen Bildbereiche mittels eines Bildverarbeitungsprogramms den einzelnen Paneel-Abschnitten zugeordnet werden können. Als Sensor eignet sich beispielsweise ein CCD-Sensor. Durch das Bildverarbeitungsprogramm können die Lichtstärke, der Farbton und die Farbsättigung der einzelnen Bildbereiche miteinander verglichen werden. Aus diesem Vergleich sind Regelungsdaten und/oder Regelungssignale errechenbar, die einer Kontrolleinheit zuführbar sind. Die Kontrolleinheit regelt die Leuchtmittel der Paneel-Abschnitte unter Berücksichtigung der Regelungsdaten und/oder Regelungssignale.

Es können aber auch gleich viele Sensoren wie Paneel-Abschnitte vorhanden sein, die vorzugsweise an geeigneter Stelle im Paneel angeordnet sind. Selbstverständlich sind auch mehrere Sensoren pro Paneel-Abschnitt einsetzbar. Auch diese Sensoren können die Lichtstärke und/oder den Farbton und/oder die Farbsättigung des zugeordneten, beleuchteten Paneel-Abschnitts erfassen. Das Signal des mindestens einen Sensors ist einer Kontrolleinheit zuführbar und kann von dieser verarbeitet werden.

Die Kontrolleinheit kann eine von der Fahrtreppe oder des Fahrsteiges unabhängige Recheneinheit sein, sie kann aber auch ein Teil einer Steuerung der Fahrtreppe oder des Fahrsteiges sein. Beispielsweise kann die Kontrolleinheit aufgrund des Sensorsignals erkennen, ob alle Paneel-Abschnitte beleuchtet sind oder nicht. Ferner kann das Sensorsignal zur Regelung der Lichtstärke und/oder des Farbtons und/oder der Farbsättigung des zugeordneten Paneel-Abschnitts herangezogen werden. Dies ermöglicht, die Paneel-Abschnitte wahlweise zu schalten, den Farbton, die Farbsättigung und die Lichtstärke zu variieren und durch diese Lichtakzente die Wahrnehmung und Stimmung der Benutzer zu beeinflussen. So können beispielsweise durch eine warme, sanfte Beleuchtung Aggressionen und Ängste gedämpft und das Risiko von Vandalenakten gesenkt werden. Der Wechsel zu unangenehmerer, kalt oder grell wirkender Beleuchtung kann dazu führen, dass unerwünschte Personen die Umgebung beispielsweise der Fahrtreppe oder des Fahrsteiges rasch verlassen.

Wenn mindestens zwei Paneel-Abschnitte vorhanden sind, kann einer der Paneel-Abschnitte als Master definiert sein und die Lichtstärke und/oder den Farbton und/oder die Farbsättigung vorgeben. Die übrigen Paneel-Abschnitte können als Slave definiert sein, wobei durch die Kontrolleinheit deren Lichtstärke und/oder deren Farbton und/oder deren Farbsättigung dem als Master definierten Paneel-Abschnitt angepasst werden können.

Selbstverständlich kann die fünfte Schicht von einer Motivfolie überspannt oder mit einer Bedruckung versehen sein, so dass bei eingeschaltetem Leuchtmittel die Motivfolie oder die Bedruckung durch das beleuchtbare Paneel hinterleuchtet ist. Die Aufdrucke und Motivfolien können ferner mittels einer weiteren Glasscheibe geschützt werden, welche diese und die fünfte Schicht überspannt.

Das beleuchtbare Paneel kann vielseitig in einer Fahrtreppe oder in einem Fahrsteig eingesetzt werden. Eine Fahrtreppe oder ein Fahrsteig beinhaltet ein Tragwerk, mindestens ein im Tragwerk angeordnetes Stufenband oder Palettenband und je eine am Tragwerk angeordnete, an jeder Längsseite des Stufenbandes oder Palettenbandes sich erstreckende Balustrade. Das Tragwerk weist große Seitenflächen und eine große Untersichtfläche auf. Ferner sind auch große Balustradenseitenflächen vorhanden. Alle diese Flächen können nach Wunsch des Betreibers mit einem beleuchtbaren Paneel versehen oder verkleidet sein. Zu jedem beleuchtbaren Paneel sollte die Fahrtreppe oder der Fahrsteig mindestens ein Leuchtmittel aufweisen, welches im Kantenbereich des beleuchtbaren Paneels angeordnet ist.

Beispielsweise kann das mindestens eine beleuchtbare Paneel ein Untersichtverkleidungspaneel oder ein Seitenverkleidungspaneel sein. Dessen reflektierende Abdeckung ist gegen das Tragwerk gerichtet, so dass die beleuchtbare Seitenoberfläche des beleuchtbaren Paneels vom Benutzer der Fahrtreppe oder des Fahrsteiges gesehen werden kann.

Ferner kann das mindestens eine beleuchtbare Paneel auch ein Balustradenverkleidungspaneel der Balustrade sein, wobei dessen reflektierende Abdeckung gegen eine innere Struktur der Balustrade gerichtet ist. Selbstverständlich können auch zwei beleuchtbare Paneele mit eigenstabilen, reflektierenden Abdeckungen einander anliegen und eine Balustrade oder einen Balustradenabschnitt bilden, wobei die innere Struktur durch die einander anliegenden, eigenstabilen reflektierenden Abdeckungen gebildet wird. Wenn das Balustradenverkleidungspaneel mit seiner beleuchtbaren Seitenoberfläche gegen das Stufenband oder Palettenband gerichtet ist, wird dieser Bereich hervorragend ausgeleuchtet. Aufgrund der großflächigen Verteilung des Lichts über die Seitenoberfläche des beleuchtbaren Paneels werden die Benutzer nicht geblendet.

Des Weiteren kann das mindestens eine beleuchtbare Paneel auch eine Schutzvorrichtung oder Teil einer Schutzvorrichtung sein, dessen reflektierende Abdeckung auf der, dem Blickfeld eines Benutzers der Fahrtreppe oder des Fahrsteiges abgewandten Seite des Paneels angeordnet ist. Diese Schutzvorrichtung kann ein Abweiser sein, welcher renitente Benutzer vom Fahrsteig- oder Fahrtreppen-Surfen abhält. Die Schutzvorrichtung kann auch eine Absturzsicherung sein, die sich parallel zur Balustrade erstreckt und ein übersteigen der Balustrade verhindert oder zumindest erschwert.

Die Schutzvorrichtung muss aber nicht permanent dominant in Erscheinung treten. Das beleuchtbare Paneel der Schutzvorrichtung wird vorzugsweise nur dann beleuchtet, wenn der Benutzer gewarnt werden soll. Um dies zu erreichen, kann beispielsweise ein vorbestimmter Bereich um die Schutzvorrichtung von einem Bewegungssensor überwacht werden, welcher an eine Steuerung der Fahrtreppe oder des Fahrsteigs anschließbar ist. Bei drohender Gefahr wird das Leuchtmittel vorzugsweise rotes Licht emittierend, eingeschaltet, sobald ein Benutzer in den vorbestimmten Bereich eingedrungen ist.

Anstelle eines Bewegungssensors oder in Kombination mit diesem kann die Schutzvorrichtung auch einen Kraftmesssensor aufweisen. Den vorangehenden Ausführungen entsprechend wird das Leuchtmittel vorzugsweise rotes Licht emittierend, eingeschaltet, sobald ein Benutzer eine Kraft auf die Schutzvorrichtung ausübt.

Ferner kann die Schutzvorrichtung mindestens einen Warnhinweis aufweisen, welcher bei eingeschaltetem Leuchtmittel durch das beleuchtbare Paneel hinterleuchtet ist. Dieser Warnhinweis kann auf der Seitenoberfläche der fünften Schicht aufgedruckt, aufgeklebt oder in die fünfte Schicht eingraviert sein.

Wie weiter oben erwähnt, kann auch die Aufzugkabine eines Aufzugs mit beleuchtbaren Paneelen ausgerüstet sein. Die Aufzugkabine weist üblicherweise einen Kabinenrahmen auf. Am Kabinenrahmen werden Kabinenwände, gegebenenfalls eine Kabinentüre, ein Kabinenboden und ein Kabinendach befestigt. Jeder dieser Teile weist eine Fläche auf, die nach Wunsch des Betreibers mit mindestens einem beleuchtbaren Paneel versehen sein kann. Vorzugsweise bilden die beleuchtbaren Paneele selbst die Kabinenwände, gegebenenfalls die Kabinentüre, den Kabinenboden und/oder das Kabinendach. Eine mit beleuchtbaren Paneelen versehene Aufzugskabine sollte mindestens ein Leuchtmittel aufweisen, das an mindestens einem Kantenbereich des mindestens einen, beleuchtbaren Paneels angeordnet ist.

Der Aufbau eines beleuchtbaren Paneels sowie dessen Anwendungsmöglichkeiten in einer Fahrtreppe, in einem Fahrsteig oder in einer Aufzugskabine werden im Folgenden anhand einer Fahrtreppe und mit Bezugnahme auf die Zeichnungen näher erläutert. Darin zeigen:
- Figur 1:: schematisch im Aufriss eine Fahrtreppe mit einem Tragwerk, mit Balustraden und mit einer Schutzvorrichtung, welche beleuchtbare Paneele aufweisen;
- Figur 2:: die Fahrtreppe der Figur 1 im Querschnitt A-A
- Figur 3:: eine Detailansicht des in der Figur 2 angegebenen Details B, in welchem ein Eckbereich des Tragwerks mit einem beleuchtbaren Paneel als Seitenverkleidungspaneel und mit einem beleuchtbaren Paneel als Untersichtverkleidungspaneel dargestellt ist;
- Figur 4:: in dreidimensionaler, vergrößerter Ansicht ein Ausschnitt des in der Figur 3 gezeigten Seitenverkleidungspaneels aus der in Figur 3 angegebenen Blickrichtung C, und
- Figur 5:: schematisch in geschnittenem Aufriss einen Aufzug mit einer Aufzugkabine, deren Kabinenwände und deren Kabinendach beleuchtbare Paneele sind.

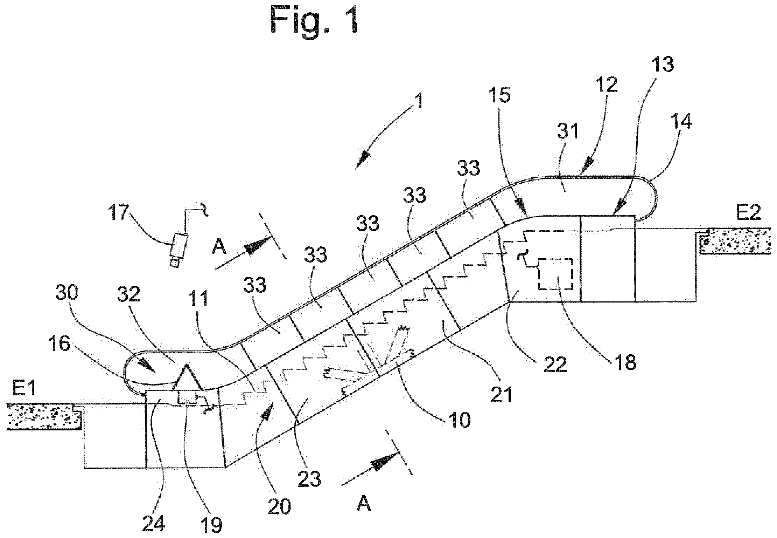

In Figur 1 ist schematisch im Aufriss eine Fahrtreppe 1 mit einem Tragwerk 10 dargestellt. Die Fahrtreppe 1 verbindet eine untere Ebene E1 mit einer oberen Ebene E2. Im Tragwerk 10 ist ein umlaufendes Stufenband 11 angeordnet, welches in der oberen Ebene E2 und in der unteren Ebene E1 umgelenkt wird und somit einen vorlaufenden Abschnitt und einen rücklaufenden Abschnitt aufweist. Der besseren Übersichtlichkeit wegen wurde auf die Darstellung des rücklaufenden Abschnitts verzichtet, ebenso auch auf die Darstellung von Spanten, Führungsschienen, Schienenblöcken und einer Antriebseinheit. Die Fahrtreppe 1 weist ferner zwei Balustraden 12 auf, die sich jeder Längsseite des Stufenbandes 11 entlang erstrecken, wobei in der Figur 1 nur die in der Betrachtungsebene vorne befindliche Balustrade 12 sichtbar ist. An jeder Balustrade 12 ist ein Handlauf 14 umlaufend angeordnet, wobei dessen rücklaufender Abschnitt in einem Balustradensockel 13 angeordnet ist, welcher die Balustrade 12 mit dem Tagwerk 10 verbindet. Mindestens eine Seite des Tragwerks 10 ist mit einem beleuchtbaren Seitenverkleidungspanel 20 verkleidet, wobei dieses in mehrere Paneel-Abschnitte 21, 22, 23, 24 unterteilt ist. Die Paneel-Abschnitte 21, 22, 23, 24 erstrecken sich in der Höhe über das Tragwerk 10 und den Balustradensockel 13.

In der Figur 1 zeigt sich auch einer der großen Vorteile des Aufbaus der beleuchtbaren Paneele, wie sie die vorliegende Schrift offenbart. Die beleuchtbaren Paneele können in ihrer flächigen Ausdehnung, gemeint ist damit die Kontur von deren Seitenoberfläche, nahezu alle denkbaren Formen aufweisen. Im Ausführungsbeispiel der Figur 1 weist ein erster Paneel-Abschnitt 21 des beleuchtbaren Seitenverkleidungspaneels 20 eine rechteckige Seitenoberfläche auf und die Seitenoberfläche eines zweiten Paneel-Abschnitts 22 ist den zu verkleidenden Konturen mit einem Übergangsradius 15 und dem auslaufenden Balustradensockel 13 angepasst.

Auch die Balustrade 12 kann mindestens ein beleuchtbares Paneel aufweisen. Dieses beleuchtbare Balustradenverkleidungspaneel 30 ist auch in mehrere Paneel-Abschnitte 31, 32, 33 unterteilt. Um die Herstellungskosten möglichst tief zu halten, weist das beleuchtbare Balustradenverkleidungspaneel 30 mehrere mittlere Paneel-Abschnitte 33 auf, deren rechteckige Seitenoberfläche in der Länge und in der Höhe identische Abmessungen aufweisen. Ein oberer Paneel-Abschnitt 31 und ein unterer Paneel-Abschnitt 32 sind in ihrer flächigen Ausdehnung der Kontur der Balustrade 12 in diesen Bereichen und dem jeweils angrenzenden mittleren Paneel-Abschnitt 33 angepasst.

Seitlich der Balustrade 12 ist im Bereich des unteren Paneel-Abschnitts 32 eine Schutzvorrichtung 16 angeordnet. Diese soll verhindern, dass gedankenlose Benutzer die Fahrtreppe 1 zum Fahrtreppen-Surfen missbrauchen. Die Schutzvorrichtung 16 im vorliegenden Beispiel ist ein beleuchtbares Paneel, dessen lichtemittierende Seitenoberfläche in Richtung der Handlaufumlenkung des Handlaufs 14 gerichtet ist. Die Beleuchtung der Schutzvorrichtung 16 kann permanent eingeschaltet sein. Ihre Schutz- und Warnwirkung ist jedoch wesentlich effizienter, wenn sie nur dann eingeschaltet ist, wenn Gefahr droht. Um dies zu erreichen, kann beispielsweise ein Kraftmesssensor 19 mit der Schutzvorrichtung 16 gekoppelt sein, welcher eine auf die Schutzvorrichtung 16 einwirkende Kraft erfasst. Dessen Signal kann an eine Steuerung 18 der Fahrtreppe 1 weitergeleitet werden, welche aufgrund des empfangenen Signals ein Leuchtmittel der Schutzvorrichtung 16 einschaltet.

Eine weitere Möglichkeit besteht darin, einen vorbestimmten Bereich um die Schutzvorrichtung 16 herum mittels eines Bewegungssensors 17 zu überwachen. Im vorliegenden Beispiel ist als Bewegungssensor 17 schematisch eine Videokamera dargestellt, deren Bildsequenzen mittels eines Bildverarbeitungsprogramms kontinuierlich oder in diskreten Schritten analysiert werden kann. Sobald ein Gegenstand oder ein Benutzer in den vorbestimmten Bereich eingedrungen ist, wird ein Signal an die Steuerung 18 der Fahrtreppe 1 gesendet. In der Steuerung 18 kann das empfangene Signal ausgewertet werden, wobei je nach Art und Dringlichkeit die Beleuchtung der Schutzvorrichtung 16 eingeschaltet wird und gegebenenfalls das Stufenband 11 und der Handlauf 14 stillgelegt werden. Um die Übersichtlichkeit zu erhöhen, wurden die Signalleitungen zwischen den Sensoren 17, 19 und der Steuerung 18 unterbrochen dargestellt. Selbstverständlich können anstelle der Signalleitungen auch drahtlose Übermittlungsvorrichtungen eingesetzt werden.

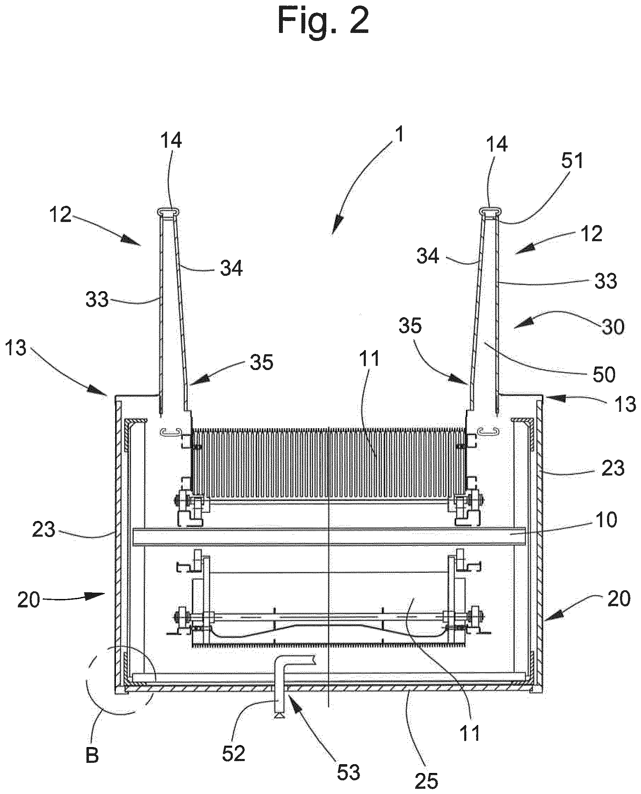

Die Figur 2 zeigt den in der Figur 1 angegeben Querschnitt A-A der Fahrtreppe 1. In dieser Figur 2 sind die Anordnung des Stufenbandes 11 im Tragwerk 10 und der beiden Balustraden 12, welche mittels Balustradensockel 13 mit dem Tragwerk 10 verbunden sind, gut einsehbar. Auch die Führung des Handlaufs 14 an der Oberseite der Balustraden 12 und im Balustradensockel 13 ist ersichtlich. Wie der Schnitt A-A zeigt, ist die Fahrtreppe 1 auf beiden Seiten mit beleuchtbaren Seitenverkleidungspaneelen 20 verkleidet. Die im Schnitt A-A angeordneten dritten Paneel-Abschnitte 23 der beleuchtbaren Seitenverkleidungspaneele 20 sind am Tragwerk 10 befestigt.

Die Untersicht des Tragwerks 10 ist mit einem beleuchtbaren Untersichtverkleidungspaneel 25 versehen. Auch dieses ist am Tragwerk 10 befestigt. Dank des in der vorliegenden Schrift offenbarten Aufbaus, kann jedes beleuchtbare Paneel 20, 25 auch Öffnungen 53 aufweisen. Die in der Figur 2 dargestellte Öffnung 53 ermöglicht die Durchführung eines Sprinklerkopfes 52 einer nicht weiter dargestellten Sprinkleranlage durch das Untersichtverkleidungspaneel 25.

Die Balustrade 12 weist eine innere Struktur 50 auf, welche eine Handlaufführung 51 des Handlaufs 14 abstützt. Ferner sind an der inneren Struktur 50 die im Schnitt A-A angeordneten, mittleren Paneel-Abschnitte 33 des beleuchtbaren Balustradenverkleidungspaneels 30 befestigt. Auf den gegen das Stufenband 11 gerichteten Innenseiten der Balustraden 12 sind je ein beleuchtbares inneres Balustradenverkleidungspaneel 34 angeordnet. Diese weisen einen in ihrer Längserstreckung verlaufenden Knick 35 auf. Auch dies ist ein entscheidender Vorteil des in der vorliegenden Schrift offenbarten Aufbaus. Die beleuchtbaren Paneele 20, 25, 30, 34 müssen nicht absolut eben ausgestaltet sein, sondern können auch Knicke 35 aufweisen oder leicht gebogen sein. Gegebenenfalls muss die ideale Anordnung eines oder mehrerer Leuchtmittel durch Versuche ermittelt werden, um eine möglichst gleichmäßige Lichtverteilung über die ganze Seitenoberfläche des beleuchtbaren Paneels 20, 25, 30, 34 zu erwirken.

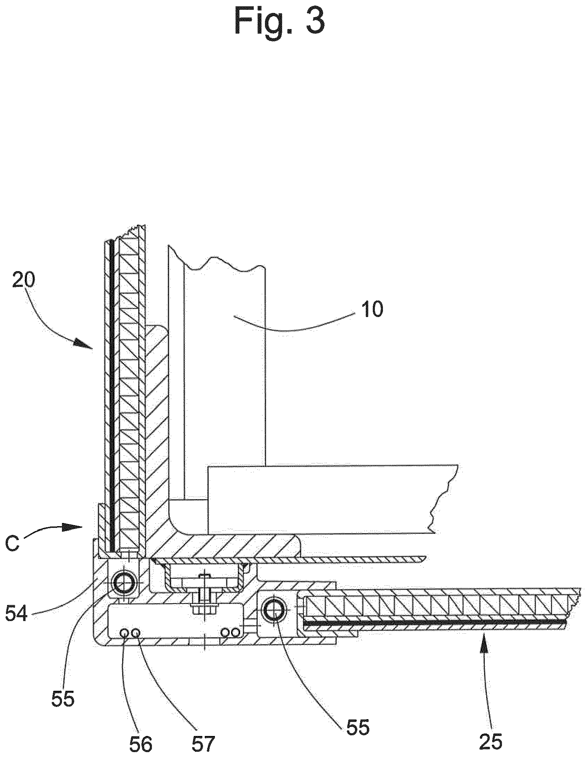

Die Figur 3 stellt eine Detailansicht des in der Figur 2 angegebenen Details B dar, welches einen Eckbereich des Tragwerks 10 mit dem beleuchtbaren Seitenverkleidungspaneel 20 und dem beleuchtbaren Untersichtverkleidungspaneel 25 zeigt. Die beiden beleuchtbaren Paneele 20, 25 sind in einem Befestigungsprofil 54 gefasst und dieses ist mit dem Tragwerk 10 fest verbunden. Das Befestigungsprofil 54 weist Hohlräume auf, in welchen die Leuchtmittel 55 zur Beleuchtung des Untersichtverkleidungspaneels 25 und des Seitenverkleidungspaneels 20 angeordnet sind. Solche Befestigungsprofile 54 werden vorzugsweise als Aluminium-Strangpressprofile gefertigt. Selbstverständlich ist das gezeigte Befestigungsprofil 54 nur eine von unzähligen Möglichkeiten. Das Befestigungsprofil 54 kann auch mehrteilig ausgeführt sein. Die beiden Leuchtmittel 55 sind beispielhaft als Leuchtstoffröhren dargestellt, selbstverständlich können jegliche Arten von Leuchtmittel 55 eingesetzt werden. Ferner weist das Befestigungsprofil 54 ausreichenden Innenraum auf, um Versorgungskabel 56 und Signalleitungen 57 unterzubringen. Das Leuchtmittel 55 kann aber auch direkt am beleuchtbaren Seitenverkleidungspaneel 20 beziehungsweise am beleuchtbaren Untersichtverkleidungspaneel 25 befestigt sein.

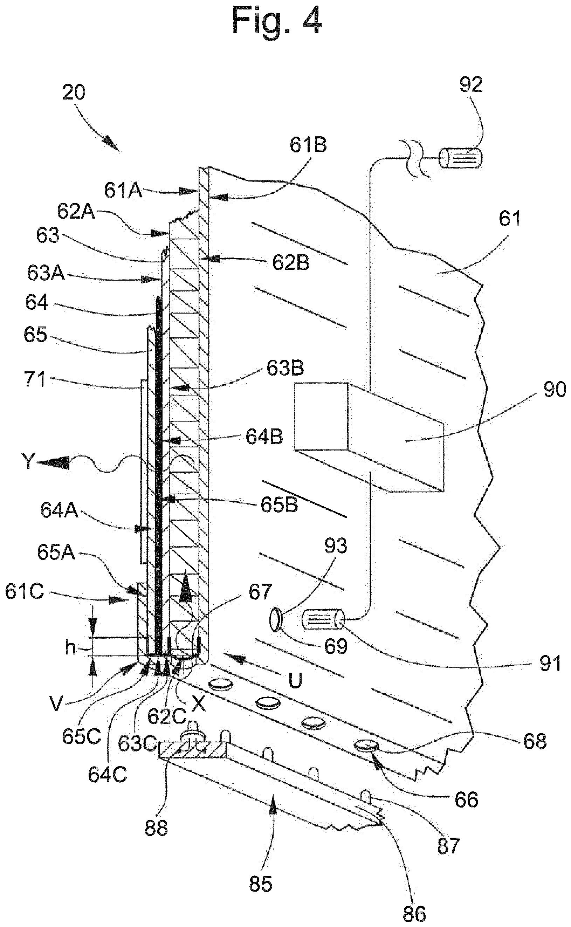

Um den Aufbau der beleuchtbaren Paneele besser darzustellen, zeigt Figur 4 in dreidimensionaler, vergrößerter Ansicht einen Ausschnitt des Seitenverkleidungspaneels 20 aus der in der Figur 3 angezeigten Blickrichtung C. Alle beleuchtbaren Paneele der Figuren 1 bis 3 weisen im Wesentlichen dieselbe Schichtabfolge des Aufbaus auf, wie das in Figur 4 dargestellte Seitenverkleidungspaneel 20. Eine erste Schicht des Aufbaus ist eine reflektierende Abdeckung 61. Beim dargestellten Seitenverkleidungspaneel 20 ist diese ein Blech aus Stahl oder Aluminium, welches gegebenenfalls eine reflektierende Beschichtung aufweist.

Die zweite Schicht ist eine lichtstreuende Partikel beinhaltende Polymerwerkstoffplatte 62, wie sie beispielsweise von der Firma Röhm unter dem Produktnamen Plexiglas EndLighten vertrieben wird. Selbstverständlich kann die reflektierende Abdeckung 61 auch eine Folie oder eine Beschichtung sein, die auf die Polymerwerkstoffplatte 62 der zweiten Schicht aufgebracht ist. Eine dritte Schicht ist eine erste transparente Glasscheibe 63, eine vierte Schicht eine transparente Polymerschicht 64 und eine fünfte Schicht eine zweite transparente Glasscheibe 65. Die dritte, vierte und fünfte Schicht 63, 64, 65 können auch fest miteinander verbunden sein, beispielsweise als Verbundglasscheibe. Jede Schicht weist zwei einander gegenüberliegende Seitenoberflächen 61A, 61B, 62A, 62B, 63A, 63B, 64A, 64B, 65A, 65B auf, deren flächige Ausdehnung durch einen Kantenbereich 61C, 62C, 63C, 64C, 65C begrenzt ist. Die Kantenbereiche 62C, 63C, 64C, 65C der zweiten bis fünften Schicht sind im vorliegenden Beispiel deckungsgleich. Die flächige Ausdehnung der reflektierenden Abdeckung 61 ist etwas grösser bemessen, so dass wie in Figur 4 dargestellt, ein Kantenabschnitt des Kantenbereichs 61C der ersten Schicht abgekantet werden kann. Die Abkantung des Kantenabschnitts 61C umfasst zwei rechtwinklige Biegekanten U, V, so dass die Kantenbereiche 62C, 63C, 64C, 65C der zweiten bis fünften Schicht durch den abgekanteten Kantenabschnitt 61C eingefasst sind.

Unterhalb des beleuchtbaren Seitenverkleidungspaneels 20 ist ein Leuchtmittel 85 angeordnet. Dieses weist einen bandförmigen, flexiblen und mit Leiterbahnen 88 versehenen Grundkörper 86 auf, auf dessen Oberseite Leuchtdioden 87 angeordnet sind. Vorzugsweise sind Leuchtdioden 87 angeordnet, die in der Lichtstärke und/oder im Farbton und/oder in der Farbsättigung einstellbar sind.

Damit das von den Leuchtdioden 87 emittierte Licht, dargestellt durch den Pfeil X, in die lichtstreuende Polymerwerkstoffplatte 62 der zweiten Schicht gelangen kann, weist der abgekantete Kantenabschnitt 61C Durchbrüche 66 auf, die auf die Lage und Grösse der Leuchtdioden 87 abgestimmt sind. Konkret bedeutet dies im vorliegenden Beispiel, dass die Teilung der Durchbrüche 66 der Teilung der Leuchtdioden 87 auf dem Grundkörper 85 entspricht. Ferner muss der Durchmesser der einzelnen Durchbrüche 66 so gross bemessen sein, dass möglichst alles emittierte Licht in die Polymerwerkstoffplatte 62 eingespeist werden kann. Die in der Polymerwerkstoffplatte 62 der zweiten Schicht eingebetteten lichtstreuenden Partikel lenken nun das in deren Kantenbereich 62C eingespeiste Licht ab, so dass dieses an der Seitenoberfläche 62A aus der zweiten Schicht austritt und durch die dritte, vierte und fünfte Schicht 63, 64, 65 dringt. Das Licht tritt aus der Seitenoberfläche 65A der Glasscheibe 65 der fünften Schicht in die Umgebung der Fahrtreppe oder des Fahrsteiges aus, wie dies durch den Pfeil Y symbolisch dargestellt ist.

Die beiden Glasscheiben 63, 65 der dritten und fünften Schicht weisen einen für Glas typischen Brechungsindex von 1.45 bis 2.14 (dimensionslose Größe) auf. Die transparente Polymerschicht 64 der vierten Schicht weist einen Brechungsindex im Bereich von 1.48 bis 1.56 auf. Bei der Verwendung der verschiedenen Materialien ist es unwahrscheinlich, dass die Polymerschicht 64 genau denselben Brechungsindex wie die beiden Glasscheiben 63, 65 aufweist, diese unterscheiden sich aber nur geringfügig voneinander. Dies führt dazu, dass das durch Kratzer in der Oberfläche der Polymerplatte 62 der zweiten Schicht sowie durch optische Kontakte zwischen der ersten und der zweiten Schicht und zwischen der zweiten und der dritten Schicht gebündelte Licht zerstreut wird, ohne es wahrnehmbar in die Spektralfarben des sichtbaren Lichts zu zerlegen. Schon aus geringer Distanz betrachtet, weist das beleuchtete Seitenverkleidungspaneel 20 durch diesen Aufbau eine gleichmäßig leuchtende Seitenoberfläche auf, welche der Seitenoberfläche 65A der zweiten transparenten Glasscheibe 65 entspricht. Die Seitenoberfläche 65A der fünften Schicht kann ferner von einer Motivfolie 71 überspannt oder mit einer Bedruckung versehen sein.

Durch den mehrere Schichten 61, 62, 63, 64, 65 aufweisenden Aufbau des Seitenverkleidungspaneels 20 können Fugen zwischen den einzelnen Schichten vorhanden sein, auch wenn die Schichten 61, 62, 63, 64, 65 satt aneinander anliegen. Die Fugenbreite der Fugen hängt von der Unebenheit der Seitenoberflächen 61A, 62A, 62B, 63A, 63B, 64A, 64B, 65B und Steifigkeit der einzelnen Schichten 61, 62, 63, 64, 65 ab, die aufeinander geschichtet den Aufbau des Seitenverkleidungspaneels 20 ergeben. Diese Fugen sind sehr schmal und weisen eine hohe Kapillarität auf. Um zu verhindern, dass sich beispielsweise Reinigungswasser in den Fugen der beleuchtbaren Paneele ansammelt, sind die Fugen im vorliegenden Ausführungsbeispiel in den Kantenbereichen 62C, 63C, 64C, 65C der Schichten 61, 62, 63, 64, 65 mittels eines Dichtungselements 67 umlaufend abgedichtet. Das Dichtungselement 67 weist zwischen den Schichten 61, 62, 63, 64, 65 eine Fugentiefe h von 0,2 mm bis 20 mm auf. Vorzugsweise beträgt die Fugentiefe jedoch 8 mm bis 12 mm. Dadurch ist die Dichtigkeit sicher gegeben und das Dichtungselement 67 kann problemlos durch den abgekanteten Kantenbereich 61C der reflektierenden Abdeckung 61 oder durch Zierleisten verborgen werden, ohne zu viel beleuchtbare Seitenoberfläche 65A des Seitenverkleidungspaneels 20 zu verdecken. Vorzugsweise wird transparenter Silikonkautschuk als Dichtungselement 67 verwendet. Damit der Eintritt des vom Leuchtelement 85 emittierten Lichts in die Polymerwerkstoffplatte 62 der zweiten Schicht nicht behindert wird, weist das Dichtelement 67 auf das Leuchtmittel 85 und die Durchbrüche 66 abgestimmte Aussparungen 68 auf.

Wie in den Figuren 1 bis 3 gezeigt, kann eine Fahrtreppe 1 oder ein Fahrsteig mehrere beleuchtbare Paneele 20, 25, 30, 34 oder Paneel-Abschnitte 21, 22, 23, 24, 31, 32, 33 aufweisen. Jedem beleuchtbaren Paneel 20, 25, 30, 34 oder Paneel-Abschnitt 21, 22, 23, 24, 31, 32, 33 kann mindestens ein Sensor 91, 92 zugeordnet sein, wie dies im Ausführungsbeispiel der Figur 4 schematisch dargestellt ist. Der Sensor 91 des Seitenverkleidungspaneels 20 ist in dessen Kantenbereich angeordnet. Damit er die Lichtstärke und/oder den Farbton und/oder die Farbsättigung des beleuchteten Seitenverkleidungspaneels 20 erfassen kann, weist die reflektierende Abdeckung 61 ein Loch 93 auf. Dieses Loch 93 kann durch einen Benutzer der Fahrtreppe oder des Fahrsteiges der die Seitenoberfläche 65C der fünften Schicht 65 betrachtet, nicht gesehen werden, weil dieses durch den abgekanteten Kantenabschnitt 61C der reflektierenden Abdeckung 61 verdeckt ist. Vorzugsweise ist das Loch 93 ebenfalls mit einer Dichtung 69 versehen, damit keine Flüssigkeiten zwischen die reflektierende Abdeckung 61 und die Polymerwerkstoffplatte 62 eindringen können. Das Signal des Sensors 91 wird einer Kontrolleinheit 90 zugeführt und kann von dieser verarbeitet werden.

Die Figur 4 zeigt noch einen weiteren Sensor 92, der einem nicht dargestellten, beleuchtbaren Paneel zugeordnet ist, beispielsweise dem in der Figur 3 dargestellten Untersichtverkleidungspaneel 25. Die Kontrolleinheit 90 kann nun aufgrund der Sensorsignale der Sensoren 91, 92 erkennen, ob alle beleuchtbaren Paneele beleuchtet sind oder nicht. Ferner kann das Sensorsignal zur Regelung der Lichtstärke und/oder des Farbtons und/oder der Farbsättigung des zugeordneten Paneels herangezogen werden. Dies ermöglicht, die Paneele oder wenn vorhanden, die Paneel-Abschnitte nach den Vorgaben des Betreibers einer Fahrtreppe oder eines Fahrsteiges wahlweise zu schalten, den Farbton, die Farbsättigung und die Lichtstärke zu variieren und durch diese Lichtakzente die Wahrnehmung und Stimmung der Benutzer zu beeinflussen.

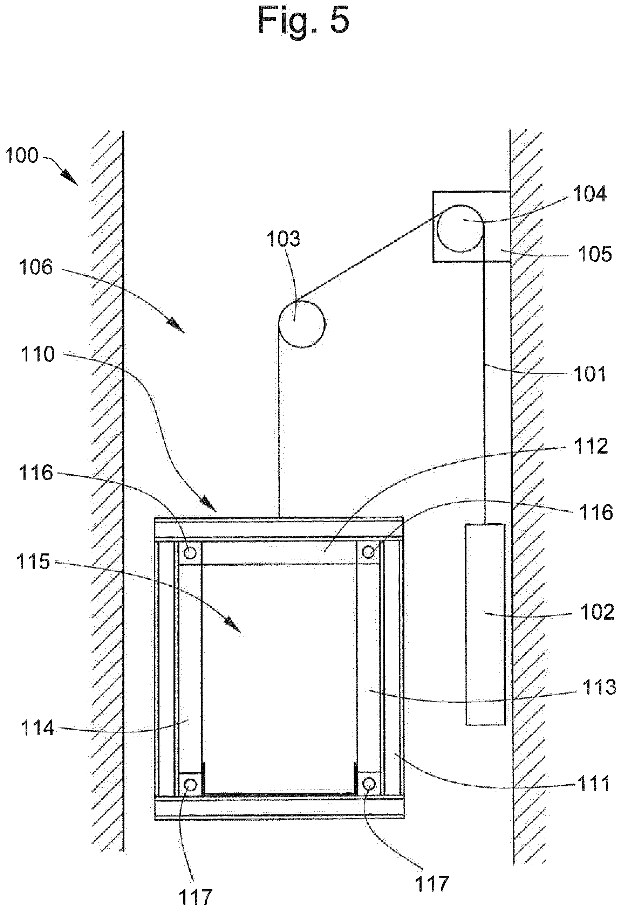

Die Figur 5 zeigt schematisch und in geschnittenem Aufriss einen Aufzug 100 mit einer Aufzugkabine 110. Die Aufzugkabine 110 ist durch ein Tragmittel 101 mit einem Gegengewicht 102 verbunden. Das Tragmittel 101 ist über eine Umlenkscheibe 103 und eine Treibscheibe 104 geführt. Die Treibscheibe 104 ist mit einem Antrieb 105 verbunden. Die Aufzugkabine 110, das Tragmittel 101, das Gegengewicht 102, die Umlenkscheibe 103, die Treibscheibe 104 und der Antrieb 105 sind in einem Aufzugschacht 106 angeordnet. Die Aufzugkabine 110 weist einen Kabinenrahmen 111 auf. Am Kabinenrahmen 111 sind als Kabinendach 112 und Kabinenwände 113, 114 dienende, beleuchtbare Paneele befestigt. Deren lichtemittierende Seitenoberflächen sind gegen den Innenraum 115 der Aufzugkabine 110 gerichtet. In den Eckbereichen des Kabinenrahmens 111 sind Leuchtmittel 116, 117 angeordnet. Die in den Eckbereichen des Kabinendachs 112 angeordneten oberen Leuchtmittel 116 speisen ihr emittierendes Licht kantenseitig sowohl in das beleuchtbare Paneel des Kabinendachs 112 als auch in die angrenzenden Kabinenwände 113, 114. Vorzugsweise können die Leuchtmittel 116, 117 in der Lichtstärke und/oder im Farbton und/oder in der Farbsättigung variiert werden. Dadurch kann das beleuchtbare Paneel auch als Fahrgastinformationssystem eingesetzt werden. Wenn beispielsweise jedes Stockwerk eines Parkhauses in einer eigenen Farbe gestrichen ist, kann der Farbton des Leuchtmittels auf die Farbe des jeweiligen Stockwerks angepasst werden, so dass dem Benutzer jederzeit genau bekannt ist, auf welchem Stockwerk er sich befindet.

Sofern die Aufzugskabine 110 in einem Aufzugschacht 106 mit transparenten Schachtwänden angeordnet ist, kann die Aufzugkabine 110 auch beleuchtbare Paneele aufweisen, deren lichtemittierende Seitenoberflächen gegen die transparenten Schachtwände gerichtet sind.

Obwohl die Erfindung durch die Darstellung spezifischer Ausführungsbeispiele anhand einer Fahrtreppe und eines Aufzugs beschrieben worden ist, ist es offensichtlich, dass diese auch in einem Fahrsteig eingesetzt werden kann und zahlreiche weitere Ausführungsvarianten in Kenntnis der vorliegenden Erfindung geschaffen werden können. So kann nur in einem Kantenabschnitt des Kantenbereichs der Polymerwerkstoffplatte Licht eingespeist werden. Vorzugsweise wird das Licht aber an zwei einander gegenüberliegenden Kantenabschnitten eingespeist. Selbstverständlich können auch den gesamten Kantenbereich der Polymerwerkstoffplatte entlang Leuchtmittel umlaufend angeordnet sein und Licht einspeisen.

Ferner muss nicht jede Fläche eines Fahrsteiges oder einer Fahrtreppe mit einem beleuchtbaren Paneel versehen sein. Beispielsweise können Fahrtreppen und Fahrsteige für Kaufhäuser anstelle der Balustraden mit beleuchtbaren Balustradenverkleidungspaneelen auch herkömmliche Glasbalustraden aufweisen. Oder es ist nur ein beleuchtbares Untersichtverkleidungspaneel vorgesehen. Das beleuchtbare Seitenverkleidungspaneel, Balustradenverkleidungspaneel oder Untersichtverkleidungspaneel muss auch nicht die gesamte verfügbare Fläche überspannen. So kann beispielsweise ein beleuchtbares Seitenverkleidungspaneel nur bis zur halben Höhe des Tragwerks reichen.

Ferner können die beleuchtbaren Paneele auch weitere transparente oder halbtransparente Schichten zwischen den vorangehend beschriebenen Schichten aufweisen. Die erweiterte Schichtabfolge dieser beleuchtbaren Paneele entspricht trotz der hinzugefügten Schichten dem beanspruchten Aufbau, weshalb auch diese vom Schutzumfang umfasst werden. Jede zusätzliche Schicht vermindert aber die Lichtleistung des beleuchtbaren Paneels.

## Patentansprüche

1. Beleuchtbares Paneel (16, 20, 25, 30, 34, 112, 113, 114), welches durch mindestens ein Leuchtmittel (55, 85, 116, 117) beleuchtbar ist und das Leuchtmittel (55, 85, 116, 117) an mindestens einem Kantenbereich des beleuchtbaren Paneels (16, 20, 25, 30, 34, 112, 113, 114) angeordnet ist, wobei das beleuchtbare Paneel (16, 20, 25, 30, 34, 112, 113, 114) einen mehrere Schichten (61, 62, 63, 64, 65) beinhaltenden Aufbau aufweist, bei dem jede Schicht (61, 62, 63, 64, 65) zwei einander gegenüberliegende Seitenoberflächen (61A, 61B, 62A, 62B, 63A, 63B, 64A, 64B, 65A, 65B) aufweist und in ihrer flächigen Ausdehnung durch einen Kantenbereich (61C, 62C, 63C, 64C, 65C) begrenzt ist, wobei die Schichtabfolge des Aufbaus als eine erste Schicht (61) eine reflektierende Abdeckung (61) aufweist, als eine zweite Schicht (62) eine transparente, kantenbeleuchtbare, lichtstreuende Partikel beinhaltende Polymerwerkstoffplatte (62) aufweist, als eine dritte Schicht (63) eine erste Glasscheibe (63) aufweist, als eine vierte Schicht (64) eine transparente Polymerschicht (64) aufweist und als eine fünfte Schicht (65) eine zweite Glasscheibe (65) aufweist, **dadurch gekennzeichnet, dass** die Schichten (61, 62, 63, 64, 65) des Aufbaus mit ihren Seitenoberflächen (61A, 62A, 62B, 63A, 63B, 64A, 64B, 65B) einander anliegen.

2. Beleuchtbares Paneel (16, 20, 25, 30, 34, 112, 113, 114) nach Anspruch 1, wobei die erste Glasscheibe (63), die transparente Polymerschicht (64) und die zweite Glasscheibe (65) eine Verbundglasscheibe ist.

3. Beleuchtbares Paneel (16, 20, 25, 30, 34, 112, 113, 114) nach Anspruch 1 oder 2, wobei der Kantenbereich (61C) der reflektierenden Abdeckung (61) an mindestens einem Kantenabschnitt abgekantet ist und die Kantenbereiche (62C, 63C, 64C, 65C) der anderen, einander anliegenden Schichten (62, 63, 64, 65) des beleuchtbaren Paneels (16, 20, 25, 30, 34, 112, 113, 114) durch den abgekanteten Kantenabschnitt (61C) eingefasst sind.

4. Beleuchtbares Paneel (16, 20, 25, 30, 34, 112, 113, 114) nach Anspruch 3, wobei der abgekantete Kantenbereich (61C) mindestens einen Durchbruch (66) aufweist, welcher auf eine Lage und Größe des mindestens einen Leuchtmittels (55, 85, 116, 117) abgestimmt ist.

5. Beleuchtbares Paneel (16, 20, 25, 30, 34, 112, 113, 114) nach einem der Ansprüche 1 bis 4, wobei das mindestens eine beleuchtbare Paneel (16, 20, 25, 30, 34, 112, 113, 114) in mehrere Paneel-Abschnitte (21, 22, 23, 24, 31, 32, 33) unterteilt ist und jeder Paneel-Abschnitt (21, 22, 23, 24, 31, 32, 33) den aus mehreren, einander anliegenden Schichten (61, 62, 63, 64, 65) beinhaltenden Aufbau aufweist.

6. Beleuchtbares Paneel (16, 20, 25, 30, 34, 112, 113, 114) nach einem der Ansprüche 1 bis 5, wobei durch den mehrere Schichten (61, 62, 63, 64, 65) aufweisenden Aufbau eines beleuchtbaren Paneels (16, 20, 25, 30, 34, 112, 113, 114) beziehungsweise eines Paneel-Abschnitts (21, 22, 23, 24, 31, 32, 33) Fugen zwischen den einzelnen Schichten (61, 62, 63, 64, 65) vorhanden sind und diese Fugen in den Kantenbereichen (61C, 62C, 63C, 64C, 65C) der Schichten (61, 62, 63, 64, 65) mittels eines Dichtungselements (67) umlaufend abgedichtet sind, wobei das Dichtungselement (67) zwischen den Schichten (61, 62, 63, 64, 65) eine Fugentiefe (h) von 0,2 mm bis 20 mm, vorzugsweise von 8 mm bis 12 mm aufweist.

7. Beleuchtbares Paneel (16, 20, 25, 30, 34, 112, 113, 114) nach Anspruch 6, wobei das Dichtungselement (67) eine auf das Leuchtmittel (55, 85, 116, 117) und die zweite Schicht (62) abgestimmte Aussparung (68) aufweist.

8. Beleuchtbares Paneel (16, 20, 25, 30, 34, 112, 113, 114) nach einem der Ansprüchen 5 bis 7, wobei jedem Paneel-Abschnitt (21, 22, 23, 24, 31, 32, 33) ein eigenes, in der Lichtstärke und/oder im Farbton und/oder in der Farbsättigung einstellbares Leuchtmittel (55, 85, 116, 117) zugeordnet ist.

9. Beleuchtbares Paneel (16, 20, 25, 30, 34, 112, 113, 114) nach Anspruch 8, wobei jedem Paneel-Abschnitt (21, 22, 23, 24, 31, 32, 33) mindestens ein Sensor (91, 92) zugeordnet ist, durch welchen Sensor (91, 92) die Lichtstärke und / oder den Farbton und/oder die Farbsättigung des zugeordneten, beleuchteten Paneel-Abschnitts (21, 22, 23, 24, 31, 32, 33) erfassbar und dessen Signal einer Kontrolleinheit (90) zuführbar ist.

10. Beleuchtbares Paneel (16, 20, 25, 30, 34, 112, 113, 114) nach Anspruch 9, wobei mindestens zwei Paneel-Abschnitte (21, 22, 23, 24, 31, 32, 33) vorhanden sind, einer der Paneel-Abschnitte (21, 22, 23, 24, 31, 32, 33) als Master definiert ist und die Lichtstärke und/oder den Farbton und/oder die Farbsättigung vorgibt und die übrigen Paneel-Abschnitte (21, 22, 23, 24, 31, 32, 33) als Slave definiert sind und durch die Kontrolleinheit (90) deren Lichtstärke und/oder deren Farbton und/oder deren Farbsättigung dem als Master definierten Paneel-Abschnitt (21, 22, 23, 24, 31, 32, 33) angepasst sind.

11. Beleuchtbares Paneel (16, 20, 25, 30, 34, 112, 113, 114) nach einem der Ansprüche 1 bis 10, wobei die fünfte Schicht (65) von einer Motivfolie (71) überspannt oder mit einer Bedruckung versehen ist, so dass bei eingeschaltetem Leuchtmittel (55, 85, 116, 117) die Motivfolie (71) oder die Bedruckung durch das beleuchtbare Paneel (16, 20, 25, 30, 34, 112, 113, 114) hinterleuchtet ist.

12. Fahrtreppe (1) oder Fahrsteig (1) beinhaltend ein Tragwerk (10), mindestens ein im Tragwerk (10) angeordnetes Stufenband (11) oder Palettenband (11) und je eine am Tragwerk (10) angeordnete, an jeder Längsseite des Stufenbandes (11) oder Palettenbandes (11) sich erstreckende Balustrade (12), sowie mit mindestens einem beleuchtbaren Paneel (16, 20, 25, 30, 34) nach einem der Ansprüche 1 bis 11 und mit mindestens einem Leuchtmittel (55, 85), das an mindestens einem Kantenbereich des mindestens einen, beleuchtbaren Paneels (16, 20, 25, 30, 34) angeordnet ist.

13. Fahrtreppe (1) oder Fahrsteig (1) nach Anspruch 12, wobei das mindestens eine beleuchtbare Paneel (16, 20, 25, 30, 34) ein Untersichtverkleidungspaneel (25) oder ein Seitenverkleidungspaneel (20) ist und dessen reflektierende Abdeckung (61) gegen das Tragwerk (10) gerichtet ist.

14. Fahrtreppe (1) oder Fahrsteig (1) nach Anspruch 12, wobei das mindestens eine beleuchtbare Paneel (16, 20, 25, 30, 34) ein Balustradenverkleidungspaneel (30, 34) der Balustrade (12) ist und dessen reflektierende Abdeckung (61) gegen eine innere Struktur (50) der Balustrade (12) gerichtet ist.

15. Fahrtreppe (1) oder Fahrsteig (1) nach Anspruch 12, wobei das mindestens eine beleuchtbare Paneel (16, 20, 25, 30, 34) eine Schutzvorrichtung (16) ist, dessen reflektierende Abdeckung (61) auf der, dem Blickfeld eines Benutzers der Fahrtreppe (1) oder des Fahrsteiges abgewandten Seite des beleuchtbaren Paneels (16) angeordnet ist.

16. Fahrtreppe (1) oder Fahrsteig (1) nach Anspruch 15, wobei ein vorbestimmter Bereich um die Schutzvorrichtung (16) herum von einem Bewegungssensor (17) überwacht ist, welcher an eine Steuerung (18) der Fahrtreppe (1) oder des Fahrsteigs anschließbar ist und das Leuchtmittel (55, 85) vorzugsweise rotes Licht emittierend, eingeschaltet ist, sobald ein Benutzer in den vorbestimmten Bereich eingedrungen ist.

17. Fahrtreppe (1) oder Fahrsteig (1) nach Anspruch 15 oder 16, wobei die Schutzvorrichtung (16) einen Kraftmesssensor (19) aufweist und das Leuchtmittel (55, 85) vorzugsweise rotes Licht emittierend, eingeschaltet ist, sobald ein Benutzer eine Kraft auf die Schutzvorrichtung (16) ausübt.

18. Fahrtreppe (1) oder Fahrsteig (1) nach einem der Ansprüche 15 bis 17, wobei die Schutzvorrichtung (16) mindestens einen Warnhinweis aufweist, welcher bei eingeschaltetem Leuchtmittel (55, 85) durch das beleuchtbare Paneel (16) hinterleuchtet ist.

19. Aufzugkabine (110) eines Aufzugs (100), wobei die Aufzugkabine (110) einen Kabinenrahmen (111) und einen Kabinenboden aufweist, sowie mit mindestens einem, mit dem Kabinenrahmen (111) verbundenen, beleuchtbaren Paneel (112, 113, 114) nach einem der Ansprüche 1 bis 11 und mit mindestens einem Leuchtmittel (116, 117), das an mindestens einem Kantenbereich des beleuchtbaren Paneels (112, 113, 114) angeordnet ist.

## Claims

1. Illuminatable panel (16, 20, 25, 30, 34, 112, 113, 114), which can be illuminated by at least one lighting means (55, 85, 116, 117) and the lighting means (55, 85, 116, 117) is arranged at at least one edge region of the illuminatable panel (16, 20, 25, 30, 34, 112, 113, 114), wherein the illuminatable panel (16, 20, 25, 30, 34, 112, 113, 114) has a construction which comprises a plurality of layers (61, 62, 63, 64, 65), in which each layer (61, 62, 63, 64, 65) has two mutually opposite side surfaces (61A, 61B, 62A, 62B, 63A, 63B, 64A, 64B, 65A, 65B) and is bounded in its area dimension by an edge region (61C, 62C, 63C, 64C, 65C), wherein the layer sequence of the construction comprises a reflective covering (61) as a first layer (61), a transparent, edge-lightable polymer material plate (62) containing light-dispersing particles as a second layer (62), a first glass pane (63) as a third layer (63), a transparent polymer layer (64) as a fourth layer (64) and a second glass pane (65) as a fifth layer (65), **characterised in that** the layers (61, 62, 63, 64, 65) of the construction contact one another by the side surfaces (61A, 62A, 62B, 63A, 63B, 64A, 64B, 65B) thereof.

2. Illuminatable panel (16, 20, 25, 30, 34, 112, 113, 114) according to claim 1, wherein the first glass pane (63), the transparent polymer layer (64) and the second glass pane (65) are a composite glass pane.

3. Illuminatable panel (16, 20, 25, 30, 34, 112, 113, 114) according to claim 1 or 2, wherein the edge region (61C) of the reflective covering (61) is flanged at at least one edge section and the edge regions (62C, 63C, 64C, 65C) of the other, mutually contacting layers (62, 63, 64, 65) of the illuminatable panel (16, 20, 25, 30, 34, 112, 113, 114) are framed by the flanged edge region (61C).

4. Illuminatable panel (16, 20, 25, 30, 34, 112, 113, 114) according to claim 3, wherein the flanged edge region (61C) has at least one passage (66) matched to a length and size of the at least one lighting means (55, 85, 116, 117).

5. Illuminatable panel (16, 20, 25, 30, 34, 112, 113, 114) according to any one of claims 1 to 4, wherein the at least one illuminatable panel (16, 20, 25, 30, 34, 112, 113, 114) is divided into a plurality of panel sections (21, 22, 23, 24, 31, 32, 33) and each panel section (21, 22, 23, 24, 31, 32, 33) has the construction comprising a plurality of mutually contacting layers (61, 62, 63, 64, 65).

6. Illuminatable panel (16, 20, 25, 30, 34, 112, 113, 114) according to any one of claims 1 to 5, wherein due to the construction, which comprises a plurality of layers (61, 62, 63, 64, 65), of an illuminatable panel (16, 20, 25, 30, 34, 112, 113, 114) or a panel section (21, 22, 23, 24, 31, 32, 33) gaps between the individual layers (61, 62, 63, 64, 54) are present and these gaps are sealed around the periphery in the edge regions (61C, 62C, 63C, 64C, 65C) of the layers (61, 62, 63, 64, 65) by means of a sealing element (67), wherein the sealing element (67) has a joint depth (h) of 0.2 millimetres to 20 millimetres, preferably from 8 millimetres to 12 millimetres, between the layers (61, 62, 63, 64, 65).

7. Illuminatable panel (16, 20, 25, 30, 34, 112, 113, 114) according to claim 6, wherein the sealing element (67) has a cut-out (68) matched to the lighting means (55, 85. 116, 117) and the second layer (62).

8. Illuminatable panel (16, 20, 25, 30, 34, 112, 113, 114) according to any one of claims 5 to 7, wherein an individual lighting means (55, 85, 116. 117) settable in light intensity and/or in colour tone and/or in colour saturation is associated with each panel section (21, 22, 23, 24, 31, 32, 33).

9. Illuminatable panel (16, 20, 25, 30, 34, 112, 113, 114) according to claim 8, wherein at least one sensor (91, 92) is associated with each panel section (21, 22, 23, 24, 31, 32, 33), through which sensor (91, 92) the light intensity and/or the colour tone and/or the colour saturation of the associated illuminated panel section (21, 22, 23, 24, 31, 32, 33) is detectable and the signal of which sensor can be fed to a control unit (90).

10. Illuminatable panel (16, 20, 25, 30, 34, 112, 113, 114) according to claim 9, wherein at least two panel sections (21, 22, 23, 24, 31, 32, 33) are present, one of the panel sections (21, 22, 23, 24, 31, 32, 33) is defined as master and predetermines the light intensity and/or the colour tone and/or the colour saturation and the remaining panel sections (21, 22, 23, 24, 31, 32, 33) are defined as slave and the colour intensity and/or colour tone and/or colour saturation thereof is or are adapted by the control unit (90) to the panel section (21, 22, 23, 24, 31, 32, 33) defined as master.

11. Illuminatable panel (16, 20, 25, 30, 34, 112, 113, 114) according to any one of claims 1 to 10, wherein the fifth layer (65) is covered by a motif film (71) or provided with printing so that when the lighting means (55, 85, 116, 117) is switched on the motif film (71) or the printing is backlit by the illuminatable panel (16, 20, 25, 30, 34, 112, 113, 114).

12. Escalator (1) or moving walkway (1) comprising a support structure (10), at least one step belt (11) or plate belt (11) arranged in the support structure (10) and a respective balustrade (12) arranged at the support structure (10) and extending at each longitudinal side of the step belt (11) or plate belt (11), as well as with at least one illuminatable panel (16, 20, 25, 30, 34) according to any one of claims 1 to 11 and with at least one lighting means (55, 85) arranged at at least one edge region of the at least one illuminatable panel (16, 20, 25, 30, 34).

13. Escalator (1) or moving walkway (1) according to claim 12, wherein the at least one illuminatable panel (16, 20, 25, 30, 34) is an under-view cladding panel (25) or a side cladding panel (20) and the reflective covering (61) thereof is directed towards the support structure (10).

14. Escalator (1) or moving walkway (1) according to claim 12, wherein the at least one illuminatable panel (16, 20, 25, 30, 34) is a balustrade cladding panel (30, 34) of the balustrade (12) and the reflective covering (61) thereof is directed towards an inner structure (50) of the balustrade (12).

15. Escalator (1) or moving walkway (1) according to claim 12, wherein the at least one illuminatable panel (16, 20, 25, 30, 34) is a protective device (16), the reflective covering (61) of which is arranged on the side of the illuminatable panel (16) facing away from the field of view of a user of the escalator (1) or moving walkway.

16. Escalator (1) or moving walkway (1) according to claim 15, wherein a predetermined region around the protective device (16) is monitored by a movement sensor (17) connectible with a control (18) of the escalator (1) or the moving walkway and the lighting means (55, 85), which emits preferably red light, is switched on as soon as a user has entered the predetermined region.

17. Escalator (1) or moving walkway (1) according to claim 15 or 16, wherein the protective device (16) comprises a force measuring sensor (19) and the lighting means (55, 85), which emits preferably red light, is switched on as soon as a user exerts a force on the protective device (16).

18. Escalator (1) or moving walkway (1) according to any one of claims 15 to 17, wherein the protective device (16) has at least one warning notice which is backlit by the illuminatable panel (16) when the lighting means (55, 85) is switched on.

19. Lift cage (110) of a lift (100), wherein the lift cage (110) comprises a cage frame (111) and a cage floor as well as with at least one illuminatable panel (112, 113, 114), which is connected with the cage frame (111), according to any one of claims 1 to 11 and with at least one lighting means (116, 117) arranged at at least one edge region of the illuminatable panel (112, 113, 114).

## Revendications

1. Panneau apte à être éclairé (16, 20, 25, 30, 34, 112, 113, 114) qui est apte à être éclairé par au moins une lampe (55, 85, 116, 117), et la lampe (55, 85, 116, 117) est disposée sur au moins une zone de bordure du panneau apte à être éclairé (16, 20, 25, 30, 34, 112, 113, 114), le panneau apte à être éclairé (16, 20, 25, 30, 34, 112, 113, 114) présentant une structure contenant plusieurs couches (61, 62, 63, 64, 65) dans laquelle chaque couche (61, 62, 63, 64, 65) présente deux surfaces latérales (61A, 61B, 62A, 62B, 63A, 63B, 64A, 64B, 65A, 65B) qui se font face, et est limitée dans son extension plane par une zone de bordure (61C, 62C, 63C, 64C, 65C), la succession de couches de la structure présentant comme première couche (61) un recouvrement réfléchissant (61), comme deuxième couche (62) une plaque de matériau polymère transparente (62), apte à être éclairé sur son bord et contenant des particules diffusant la lumière, comme troisième couche (63) une première plaque de verre (63), comme quatrième couche (64) une couche de polymère transparente (64), et comme cinquième couche (65) une deuxième plaque de verre (65), **caractérisé en ce que** les couches (61, 62, 63, 64, 65) de la structure sont appliquées avec leurs surfaces latérales (61A, 62A, 62B, 63A, 63B, 64A, 64B, 65B) les unes contre les autres.

2. Panneau apte à être éclairé (16, 20, 25, 30, 34, 112, 113, 114) selon la revendication 1, la première plaque de verre (63), la couche de polymère transparente (64) et la deuxième plaque de verre (65) étant une plaque de verre feuilleté.

3. Panneau apte à être éclairé (16, 20, 25, 30, 34, 112, 113, 114) selon la revendication 1 ou 2, la zone de bordure (61C) du recouvrement réfléchissant (61) étant repliée au niveau d'au moins une section de bordure, et les zones de bordure (62C, 63C, 64C, 65C) des autres couches (62, 63, 64, 65) du panneau apte à être éclairé (16, 20, 25, 30, 34, 112, 113, 114) qui sont appliquées les unes contre les autres étant enserrées par ladite section de bordure repliée (61C).

4. Panneau apte à être éclairé (16, 20, 25, 30, 34, 112, 113, 114) selon la revendication 3, la zone de bordure repliée (61C) présentant au moins une ouverture (66) qui est adaptée à une position et à une taille de la ou des lampes (55, 85, 116, 117).

5. Panneau apte à être éclairé (16, 20, 25, 30, 34, 112, 113, 114) selon l'une des revendications 1 à 4, le ou les panneaux aptes à être éclairés (16, 20, 25, 30, 34, 112, 113, 114) étant divisés en plusieurs sections de panneau (21, 22, 23, 24, 31, 32, 33), et chaque section de panneau (21, 22, 23, 24, 31, 32, 33) présentant la surface qui contient plusieurs couches (61, 62, 63, 64, 65) appliquées les unes contre les autres.

6. Panneau apte à être éclairé (16, 20, 25, 30, 34, 112, 113, 114) selon l'une des revendications 1 à 5, dans lequel en raison de la structure, présentant plusieurs couches (61, 62, 63, 64, 65), d'un panneau apte à être éclairé (16, 20, 25, 30, 34, 112, 113, 114) ou d'une section de panneau (21, 22, 23, 24, 31, 32, 33), il y a des joints entre les différentes couches (61, 62, 63, 64, 65), et ces joints sont rendus étanches, sur tout le tour, dans les zones de bordure (61C, 62C, 63C, 64C, 65C) des couches (61, 62, 63, 64, 65) à l'aide d'un élément d'étanchéité (67), ledit élément d'étanchéité (67) entre les couches (61, 62, 63, 64, 65) présentant une profondeur de joint (h) de 0,2 mm à 20 mm, de préférence de 8 mm à 12 mm.

7. Panneau apte à être éclairé (16, 20, 25, 30, 34, 112, 113, 114) selon la revendication 6, l'élément d'étanchéité présentant un creux (68) adapté à la lampe (55, 85, 116, 117) et à la deuxième couche (62).

8. Panneau apte à être éclairé (16, 20, 25, 30, 34, 112, 113, 114) selon l'une des revendications 5 à 7, dans lequel à chaque section de panneau (21, 22, 23, 24, 31, 32, 33) est associée sa propre lampe (55, 85, 116, 117), dont l'intensité lumineuse et/ou la nuance de couleur et/ou la saturation de couleur sont réglables.

9. Panneau apte à être éclairé (16, 20, 25, 30, 34, 112, 113, 114) selon la revendication 8, dans lequel à chaque section de panneau (21, 22, 23, 24, 31, 32, 33) est associé au moins un capteur (91, 92) grâce auquel l'intensité lumineuse et/ou la nuance de couleur et/ou la saturation de couleur de chaque section de panneau (21, 22, 23, 24, 31, 32, 33) peuvent être détectées, et dont le signal peut être transmis à une unité de contrôle (90).

10. Panneau apte à être éclairé (16, 20, 25, 30, 34, 112, 113, 114) selon la revendication 9, dans lequel il y a au moins deux sections de panneau (21, 22, 23, 24, 31, 32, 33), l'une des sections de panneau (21, 22, 23, 24, 31, 32, 33) étant définie comme maître et prédéfinissant l'intensité lumineuse et/ou la nuance de couleur et/ou la saturation de couleur, et les autres sections de panneau (21, 22, 23, 24, 31, 32, 33) étant définies comme esclaves et leur intensité lumineuse et/ou nuance de couleur et/ou saturation de couleur étant adaptées par l'unité de contrôle (90) à la section de panneau (21, 22, 23, 24, 31, 32, 33) définie comme maître.

11. Panneau apte à être éclairé (16, 20, 25, 30, 34, 112, 113, 114) selon l'une des revendications 1 à 10, la cinquième couche (65) étant couverte par un film à motif (71) ou étant pourvue d'une impression, de sorte que lorsque la lampe (55, 85, 116, 117) est allumée, le film à motif (71) ou l'impression est rétroéclairé par le panneau apte à être éclairé (16, 20, 25, 30, 34, 112, 113, 114).

12. Escalier roulant (1) ou tapis roulant (1) contenant une ossature (10), au moins une bande de marches (11) ou une bande de palettes (11) qui est disposée dans l'ossature (10), et une balustrade respective (12) qui est disposée sur l'ossature (10) et qui s'étend sur chaque côté longitudinal de la bande de marches (11) ou de la bande de palettes (11), ainsi qu'au moins un panneau apte à être éclairé (16, 20, 25, 30, 34) selon l'une des revendications 1 à 11 et au moins une lampe (55, 85) qui est disposée sur au moins une zone de bordure dudit panneau apte à être éclairé (16, 20, 25, 30, 34).

13. Escalier roulant (1) ou tapis roulant (1) selon la revendication 12, ledit panneau apte à être éclairé (16, 20, 25, 30, 34) étant un panneau de revêtement de sous-face (25) ou un panneau latéral (20), et le recouvrement réfléchissant (61) de celui-ci étant dirigé vers l'ossature (10).

14. Escalier roulant (1) ou tapis roulant (1) selon la revendication 12, ledit panneau apte à être éclairé (16, 20, 25, 30, 34) étant un panneau de recouvrement de balustrade (30, 34) de la balustrade (12), et le recouvrement réfléchissant (61) de celui-ci étant dirigé vers une structure intérieure (50) de ladite balustrade (12).

15. Escalier roulant (1) ou tapis roulant (1) selon la revendication 12, ledit panneau apte à être éclairé (16, 20, 25, 30, 34) étant un dispositif de protection (16) dont le recouvrement réfléchissant (61) est disposé sur le côté du panneau apte à être éclairé (16) opposé au champ de vision d'un utilisateur de l'escalier roulant (1) ou du tapis roulant.

16. Escalier roulant (1) ou tapis roulant (1) selon la revendication 15, une zone prédéfinie située tout autour du dispositif de protection (16) étant surveillée par un capteur de mouvement qui est apte à être raccordé à une commande (18) de l'escalier roulant (1) ou du tapis roulant, et la lampe (55, 85), qui émet de préférence une lumière rouge, étant allumée dès qu'un utilisateur a pénétré dans la zone prédéfinie.

17. Escalier roulant (1) ou tapis roulant (1) selon la revendication 15 ou 16, le dispositif de protection (16) comportant un capteur dynamométrique (19), et la lampe (55, 85), qui émet de préférence une lumière rouge, est allumée dès qu'un utilisateur exerce une force sur le dispositif de protection (16).

18. Escalier roulant (1) ou tapis roulant (1) selon l'une des revendications 15 à 17, le dispositif de protection (16) portant au moins un avertissement qui est rétroéclairé par le panneau apte à être éclairé (16) quand la lampe (55, 85) est allumée.

19. Cabine d'ascenseur (110) d'un ascenseur (100), ladite cabine d'ascenseur (110) comportant un châssis de cabine (111) et un plancher de cabine ainsi qu'au moins un panneau apte à être éclairé (112, 113, 114) selon l'une des revendications 1 à 11 et au moins une lampe (116, 117) qui est disposée sur au moins une zone de bordure du panneau apte à être éclairé (112, 113, 114).
